# EUROPÄISCHE PATENTSCHRIFT

(11) **EP 3 639 335 B1**
(45) Veröffentlichungstag und Bekanntmachung des Hinweises auf die Patenterteilung: **02.06.2021**
(21) Anmeldenummer: 18713905.0
(22) Anmeldetag: 27.03.2018
(51) Int. Cl.: H02G 3/04, B60L 53/31, H02G 11/00

(54) **LADESTATION**
CHARGING STATION
STATION DE CHARGEMENT

(30) Priorität: 16.06.2017 DE 102017113224
(43) Veröffentlichungstag der Anmeldung: 22.04.2020
(73) Patentinhaber: Innogy SE, 45128 Essen (DE)
(72) Erfinder: STEFAN, Helnerus, 59821 Arnsberg (DE); WAFFNER, Jürgen, 45307 Essen (DE)
(74) Vertreter: Cohausz & Florack
(86) Internationale Anmeldenummer: PCT/EP2018/057756
(87) Internationale Veröffentlichungsnummer: WO 2018/228731

(56) Entgegenhaltungen:
- WO-A2-2013/034872
- DE-U1-202013 101 890
- JP-A- 2000 287 310
- KR-B1- 101 737 819

## Beschreibung

Der Gegenstand betrifft eine Ladestation für Elektrofahrzeuge umfassend ein Gehäuse, in dem Gehäuse angeordnete Ladeelektronik, einen neben dem Gehäuse angeordneten, ein aus dem Gehäuse herausgeführtes Ladekabel führenden Mast und ein das Gehäuse tragendes Bodenfundament.

Die Verbreitung von Ladestationen für Elektrofahrzeuge wird entscheidend sein für die Akzeptanz der Elektromobilität. Elektrisch betriebenen Fahrzeuge benötigen eine Ladeinfrastruktur, weshalb zunehmen in öffentlichen als auch halböffentlichen Räumen Ladestationen für Elektrofahrzeuge aufgestellt werden. Elektrofahrzeuge können dabei insbesondere rein batteriebetriebene elektrische Fahrzeuge (BEV, Battery Electric Vehicles) als auch Plug-in-Hybride (PHEV, Plug-in Hybrid-Electric-Vehicles). Elektrofahrzeuge können auch Elektrozweiräder sein, beispielsweise Elektroroller.

Ein wichtiger Aspekt der Ladestationen ist der komfortable Zugang zu der bzw. die Anschlussmöglichkeit an die Ladestation. Dazu gibt es zwei verschiedene Konzepte. Zum einen gibt es das Konzept, dass die Nutzer der Elektrofahrzeuge das Ladekabel mitführen und für den Ladevorgang das Ladekabel sowohl mit der Ladestation als auch mit dem Elektrofahrzeug verbinden. Das zweite Konzept besteht darin, dass an den Ladestationen die Ladekabel fest angeschlagen sind und zur Nutzung der Ladestation lediglich der kabelendseitige Ladekabelstecker in das Fahrzeug eingesteckt werden muss.

Gerade bei der letzteren Variante ist das Ladekabel dauerhaft an der Ladestation und muss dort so verstaut werden, dass keine Gefahr für Fußgänger oder Radfahrer besteht. Insbesondere darf das an der Ladestation angeschlagene Ladekabel nicht zu einer Stolperfalle für Fußgänger oder Radfahrer werden. Auch eine Beschädigung des Ladekabels durch ein Überfahren sollte vermieden werden.

Um das Ladekabel vor Beschädigungen zu schützen und möglichst nicht auf dem Boden herumliegen zu lassen, gibt es Ladestationen, bei denen das Ladekabel an einem Mast geführt ist. Der Mast überragt in der Regel das Gehäuse der Ladeelektronik und ist dabei beispielsweise über zwei Meter, beispielsweise zwischen zwei und drei Meter hoch. Das Ladekabel ist an diesem Mast (auch Galgen genannt) flexibel geführt und wird bei Nichtgebrauch an den Mast herangeführt und kann durch den Nutzer bei Gebrauch von dem Mast weggezogen werden.

Die Montage eines solchen Mastes ist jedoch herausfordernd, da große Hebelkräfte am Boden des Mastes auftreten können und der Mast sicher gegen ein Umknicken geschützt werden muss.

Die JP2000287310A offenbart eine Entfeuchtungsvorrichtung in einer Ladevorrichtung für Elektrofahrzeuge.

Dem Gegenstand lag somit die Aufgabe zugrunde, eine Ladestation mit einem Gehäuse und einem Mast zur Verfügung zu stellen, welche besonders einfach installierbar ist.

Diese Aufgabe wird gegenständlich durch eine Ladestation nach Anspruch 1 gelöst.

Ladestationen für Elektrofahrzeuge können unterschiedlich gestaltet sein. Eine wesentliche Gestaltungsform ist durch ein einziges Gehäuse gekennzeichnet, bei dem dieses Gehäuse die Ladeelektronik führt und als Ladesäule gebildet ist. Die zweite Gruppe an Gestaltungen weist ebenfalls ein Gehäuse mit der Ladeelektronik auf und einen daneben angeordneten Mast, an dem das Ladekabel befestigt ist. Um nun die Kosten für eine Installation einer Ladestation möglichst gering zu halten, ist man bestrebt, die Anzahl an unterschiedlichen Installationsvorgängen so gering wie möglich zu halten.

Bei der Installation einer Ladestation ist zunächst die Ausschachtung vorzunehmen. Anschließend ist im Bereich der Ausschachtung das Fundament zu erstellen und dabei sind die elektrischen Anschlüsse erdseitig durch das Fundament zu führen. Es hat sich gezeigt, dass Fertigfundamentteile als Standardbauteile für Standardladestationen besonders kostengünstig sind. Diese lassen sich in einer genormten, industriellen Umgebung fertigen und sind somit weniger fehleranfällig als solche Fundamente, die im freien Feld jeweils individuell gegossen werden. Außerdem ist der Einbau eines Fertigfundamentes erheblich schneller bewerkstelligt, so dass in der Regel Fertigfundamente zum Einsatz kommen, die in die Ausschachtung gesetzt werden. Anschließend ist die Ausschachtung zu verfüllen und die Ladestation ist mechanisch an dem Fundament zu befestigen. Schließlich hat die elektrische Installation der Ladeelektronik innerhalb der Ladestation zu erfolgen.

Wie ausgeführt, eignen sich insbesondere Fertigfundamente für eine unkomplizierte Installation der Ladestation. Fertigfundamente sind jedoch für bestimmte Formfaktoren von Gehäusen vorgefertigt und lassen sich nicht einfach für andere Gehäuse einsetzen. Insbesondere wenn neben dem eigentlichen Gehäuse für die Ladestation mit der Ladeelektronik auch noch ein Mast installiert werden soll, müsste in herkömmlicher Bauweise ein dafür geeignetes Fundament hergestellt werden. Dies führte dazu sich die Stückzahlen der jeweiligen Fertigfundamente verringern, da diese sich auf die jeweilig unterschiedlichen Gestaltungen der Ladestationen aufteilen.

Erfindungsgemäß ist nun erkannt worden, dass ein für eine herkömmliche Ladestation bereitgestelltes Bodenfundament ausreichend sein kann, um hieran auch den Mast zu befestigen. Um dies zu erreichen, ist eine Bodenplatte zwischen Gehäuse und Bodenfundament angeordnet. An der Bodenplatte wird der Mast befestigt. Die Bodenplatte ist somit ein zwischen dem Gehäuse und dem Bodenfundament angeordnetes, eigenes Bauteil, welches bedarfsweise beigestellt werden kann. Wird eine Ladestation ohne Mast installiert, ist eine Bodenplatte nicht notwendig. Andererseits kann jedoch bei der Montage einer Ladestation mit Mast das herkömmliche Bodenfundament verwendet werden und darauf zunächst die Bodenplatte aufgelegt werden. Anschließend wird an der Bodenplatte sowohl das Gehäuse, als auch der Mast befestigt. Das Bodenfundament trägt dann über die Bodenplatte sowohl das Gehäuse als auch den Mast. Somit kann ein Bodenfundament sowohl für eine Ladestation mit Mast als auch eine Ladestation ohne Mast eingesetzt werden.

Die Bodenplatte ist zwischen dem Boden des Gehäuses und der Oberseite des Bodenfundaments befestigt. Erfindungsgemäß wird die Bodenplatte zwischen dem Boden des Gehäuses und dem Bodenfundament verschraubt.

An der Bodenplatte wird gemäß einem Ausführungsbeispiel der Mast bodenseitig befestigt. Hierbei kann der Mast an der Bodenplatte verschraubt oder verschweißt werden.

Gemäß einem Ausführungsbeispiel wird vorgeschlagen, dass der Mast einen Federzug aufweist. An dem Federzug kann das Ladekabel befestigt werden. Insbesondere ist der Federzug im Bereich des oberen Endes des Mastes angeordnet. Der Federzug kann in einem Gehäuse des Mastes, welches beispielsweise das oberseitige Ende des Mastes abschließt, eingehaust sein. Der Federzug kann ein Seil aufweisen, mit dem das Ladekabel befestigt ist. Über den Federzug lässt sich das Ladekabel von dem Mast wegziehen. Im unbelasteten Zustand zieht der Federzug das Ladekabel zurück an den Mast, so dass dieses nicht auf dem Boden liegt.

Auch kann der Mast ein Federmast sein oder einen Federmast aufweisen und das Ladekabel durch die Feder des Federmastes geführt werden. Durch den Federmast ist das Ladekabel flexibel an dem Mast befestigt und kann gegebenenfalls relativ zu dem Mast bzw. relativ zu dem Gehäuse bewegt werden.

Gemäß einem Ausführungsbeispiel wird vorgeschlagen, dass das Ladekabel zumindest im Bereich des Ladekabelsteckers mit dem Federzug verbunden ist. Insbesondere ist das Ladekabel im Bereich des Ladekabelsteckers mit einem mit dem Federzug verbundenen Seil verbunden. Dadurch wird sichergestellt, dass der Ladekabelstecker stets in Richtung des Mastes im unbelasteten Zustand gezogen wird und vorzugsweise nicht auf dem Boden liegen bleibt, nachdem ein Ladevorgang abgeschlossen wurde.

Auch kann das Ladekabel alternativ oder kumulativ in einem Mittenbereich zwischen dem Ladekabelstecker und dem Gehäuse mit dem Federzug, ggf. über ein Seil, verbunden sein. Durch geeignete Einstellung der Federkräfte des Federzugs kann das Ladekabel somit austariert sein und der Benutzer kann das Ladekabel besonders einfach an sein Fahrzeug heranführen. Die Gewichtskraft des Ladekabels kann dabei zumindest in Teilen durch den Federzug kompensiert werden.

Gemäß einem Ausführungsbeispiel ist die Bodenplatte metallisch. Diese lässt sich besonders einfach konfektionieren, um gegebenenfalls unterschiedliche Abstände zwischen Gehäuse und Mast zu realisieren. Außerdem kann die Bodenplatte aus einem Blech beispielsweise gestanzt sein. Insbesondere kann die Bodenplatte eine Materialstärke von zwischen 0,5 mm und 5 cm aufweisen. Die Bodenplatte ist vorzugsweise aus Edelstahl gebildet.

Gemäß einem Ausführungsbeispiel weist die Bodenplatte zumindest die Größe der Grundfläche des Gehäuses und/oder des Mastes auf. Erfindungsgemäß steht das Gehäuse mit seinem Boden vollflächig auf der Bodenplatte auf. Das Gleiche gilt vorzugsweise für den Mast, der mit seinem Boden vollflächig auf der Bodenplatte aufstehen kann. Dies führt zu einer hohen Stabilität des Gehäuses als auch des Mastes an der Bodenplatte.

Gemäß einem Ausführungsbeispiel wird vorgeschlagen, dass die Bodenplatte einen in Richtung des Mastes ragenden Flansch aufweist und dass der Mast den Flansch bodenseitig umschließt. Auch ist es möglich, dass der Mast bodenseitig von dem Flansch umschlossen wird. Der Flansch ist vorzugsweise eine Befestigungshilfe. Die Bodenplatte ist vorzugsweise als Flachteil gebildet und lediglich dort, wo der Mast befestigt wird, kann aus der flachen Oberfläche der Flansch in der Art eines Anschlags herausragen. Der Mast kann dann über diesen Flansch gestülpt werden. Auch ist es möglich, dass der Flansch den Mast aufnimmt, so dass der Mast in den Flansch eingesteckt wird. In beiden Fällen kann, nachdem der Mast an dem Flansch angeordnet wurde, eine Befestigung des Mastes an dem Flansch erfolgen. Hierbei ist es beispielsweise möglich, dass der Mast mit radial zum Mittelpunkt des Flansches weisenden Bolzen oder Schrauben befestigt ist. Der Flansch selber kann an der Bodenplatte verschweißt oder verschraubt sein. Insbesondere kann eine axial verlaufende Schraube bzw. Bolzen durch Flansch und Bodenplatte vorgesehen sein, die den Flansch an der Bodenplatte befestigt.

Gemäß einem Ausführungsbeispiel wird vorgeschlagen, dass die Bodenplatte eine Kabeldurchführung aufweist. Insbesondere weist die Bodenplatte eine Kabeldurchführung in dem Bereich auf, in dem der Boden des Gehäuses auf der Bodenplatte aufsitzt. Somit kann ein Erdkabel, welches zur Versorgung der Ladeelektronik mit elektrischer Leistung dient, sowohl durch das Bodenfundament als auch durch die Bodenplatte in das Innere des Gehäuses geführt werden.

Für den Fall, dass das Ladekabel im Inneren des Mastes geführt ist, kann auch im Bereich des Mastes eine Kabeldurchführung in der Bodenplatte vorgesehen sein.

Gemäß einem Ausführungsbeispiel ist das Ladekabel fest an dem Gehäuse angeschlagen. Das bedeutet, dass die Ladestation neben dem Gehäuse und dem Mast auch noch durch das Ladekabel gebildet ist. Dieses fest angeschlagene Kabel wird durch an dem Mast angeordnete Führungsmittel, beispielsweise den Federzug, geführt.

Gemäß einem Ausführungsbeispiel wird vorgeschlagen, dass der Mast einen sich in Längsrichtung erstreckenden, bodenseitig offenen Hohlraum aufweist. Der Mast ist somit rohrförmig und bodenseitig offen, so dass er vorzugsweise auf den Flansch aufgesetzt werden kann. In diesem Fall kann es vorteilhaft sein, wenn das Ladekabel durch die Kabeldurchführung bodenseitig in den Hohlraum geführt ist. Dann kann das Ladekabel von dem Boden des Mastes bis in einen oberseitigen Bereich im Innern des Hohlraums geführt sein und dort aus dem Hohlraum des Mastes herausgeführt sein.

Hierbei kann im Bereich der Durchführung des Kabels durch den Mast das Kabel durch Umlenkrollen geschützt sein.

Innerhalb des Mastes kann das Ladekabel an einem Seilzug geführt sein. Dieser kann dafür verantwortlich sein, dass im unbelasteten Zustand das Kabel in den Mast zurückgezogen wird. Ein Nutzer kann dann unter Aufwendung einer Zugkraft das Kabel aus dem Mast herausziehen und in das Elektrofahrzeug einstecken. Nach Ende des Ladevorgangs wird das Kabel dann durch den Seilzug wieder zurück in den Mast gezogen.

Gemäß einem Ausführungsbeispiel wird vorgeschlagen, dass die Bodenplatte eine zwischen dem Gehäuse und dem Flansch, auf der dem Bodenfundament zugewandten Seite angeordnete Nut aufweist. Die Nut ist somit durch die Bodenplatte verdeckt und verläuft zwischen Bodenfundament und Bodenplatte. In dieser Nut kann das Ladekabel zwischen dem Gehäuse und dem Mast geführt sein.

Mit Hilfe der gegenständlichen Bodenplatte ist eine Installation einer Ladestation mit einem Gehäuse und einem Mast in besonders einfacher Weise möglich.

Nachfolgend wird der Gegenstand anhand einer Ausführungsbeispiele zeigenden Zeichnung näher erläutert. In der Zeichnung zeigen:
- Fig. 1: eine schematische Ansicht eines Gehäuses einer Ladestation mit einem Bodenfundament;
- Fig. 2: eine schematische Ansicht des Aufbaus gemäß Fig. 1 mit einer Bodenplatte;
- Fig. 3: eine Draufsicht auf eine Bodenplatte gemäß einem Ausführungsbeispiel;
- Fig. 4a),b): Ansichten einer Bodenplatte gemäß einem Ausführungsbeispiel;
- Fig. 5: Ansicht einer Bodenplatte gemäß einem Ausführungsbeispiel;
- Fig. 6: eine schematische Ansicht einer Befestigung eines Mastes an einem Flansch;
- Fig. 7: eine weitere schematische Ansicht einer Befestigung eines Mastes an einem Flansch;
- Fig. 8: eine weitere schematische Ansicht einer Befestigung eines Mastes an einem Flansch;
- Fig. 9: eine Ladestation mit einem Gehäuse und einem Mast gemäß einem Ausführungsbeispiel;
- Fig. 10: eine Ladestation mit einem Gehäuse und einem Mast gemäß einem weiteren Ausführungsbeispiel;
- Fig. 11: eine Ladestation mit einem Gehäuse und einem Mast gemäß einem weiteren Ausführungsbeispiel.

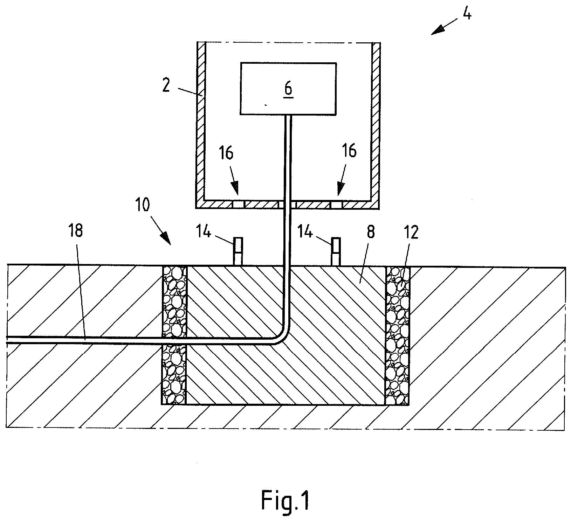

Fig. 1 zeigt in einer schematischen Schnittansicht ein Gehäuse 2 einer Ladestation 4 mit einer Ladeelektronik 6. Die Ladeelektronik 6 ist im Inneren des Gehäuses 2 untergebracht.

Das Gehäuse 2 ist auf einem Bodenfundament 8 aufsetzbar. Das Bodenfundament 8 ist dabei vorzugsweise ein Betonfundament, insbesondere ein Betongussteil. Das Bodenfundament 8 kann ein Fertiggussteil sein, welches fertig gegossen in eine Ausschachtung 10 eingesetzt wird. Anschließend wir die Ausschachtung 10 mit einem Füllmaterial verfüllt.

An dem Bodenfundament 8 sind vorzugsweise oberseitig herausragende Schrauben oder Bolzen 14 vorgesehen. Die Bolzen 14 sind in dem Bodenfundament fest verankert und korrespondieren mit Öffnungen 16 im Boden des Gehäuses 2.

Zur Montage der Ladestation 4 wird zunächst die Ausschachtung 10 hergestellt. Anschließend wird ein Erdkabel 18, welches eine elektrische Verbindung zu einem elektrischen Versorgungsnetz herstellt, in die Ausschachtung 10 geführt. Auch ist es möglich, dass das Erdkabel 18 bereits in der Ausschachtung 10 liegt.

Anschließend wird das Bodenfundament 8 in die Ausschachtung 10 eingesetzt und das Erdkabel 18 wird durch eine Durchführung in dem Bodenfundament 8 zu der Oberseite des Bodenfundaments 8 geführt. Anschließend wird die Ausschachtung 10 mit Füllmaterial 12 verfüllt, so dass das Bodenfundament 8 sicher im Erdreich gehalten ist.

Danach wird das Gehäuse 2 mit seinen Öffnungen 16 auf die Bolzen 14 aufgesetzt und an den Bolzen 14 verschraubt. Dies gewährleistet einen sicheren Stand des Gehäuses 2 auf dem Bodenfundament 8.

Abschließend wird die Ladeelektronik 6 noch mit dem Erdkabel 18 verbunden, so dass die Ladestation 4 elektrisch angeschlossen ist.

Es ist jedoch so, dass nicht nur solche Ladestationen mit einem einzigen Gehäuse 2 in Betrieb genommen werden, sondern auch solche Ladestationen, die neben dem Gehäuse 2 mit einem zusätzlichen Mast versehen sind. Der Mast steht dabei in der Regel seitlich des Gehäuses 2. Der Mast dient in der Regel dazu, ein fest an dem Gehäuse 2 angeschlagenes Ladekabel zu führen, so dass dies in der Ruhestellung nicht auf dem Boden liegt und von dieser Ruhestellung durch den Nutzer in eine Gebrauchsstellung gezogen werden kann. Dabei soll das Ladekabel möglichst flexibel an unterschiedliche Positionen in Gebrauchsstellung gezogen werden können, weshalb der Mast vorzugsweise eine Rückführung für das Ladekabel in seine Ruhestellung gewährleistet.

Um sicherzustellen, dass das Ladekabel in der Ruhestellung nicht auf dem Boden aufliegt, hat der Mast eine gewisse Höhe, die beispielsweise über 2 m, insbesondere über 2,50, insbesondere über 2,80m, beispielsweise bei 2,85 m liegt. Ein solcher Mast darf jedoch nicht umkippen, so dass auch dieser Mast ein Fundament braucht.

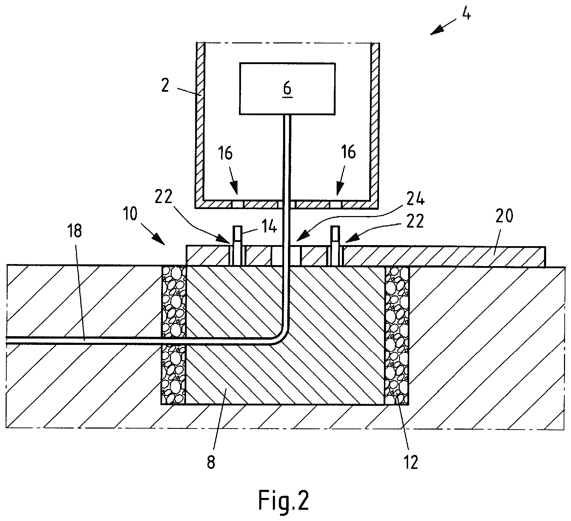

Es wurde nun erkannt, dass es vorteilhaft ist, wenn das Bodenfundament 8 einer herkömmlichen Ladestation mit nur einem Gehäuse 2 auch für die Befestigung des Mastes, wie in der Fig. 2 dargestellt, eingesetzt werden kann. Neben den in der Fig. 1 dargestellten Elemente weist die Fig. 2 noch die Bodenplatte 20 auf. Die Bodenplatte 20 ist vorzugsweise aus Metall. Die Bodenplatte 20 ist vorzugsweise ein Flachteil. Die Bodenplatte 20 ist insbesondere ein Metallblech, insbesondere aus Edelstahl. Die Bodenplatte 20 ist vorzugsweise ein Stanzteil, welches aus einem Metallblech ausgestanzt wurde.

Die Bodenplatte 20 weist zumindest Öffnungen 22 auf, die mit den Bolzen 14 korrespondieren. Bevor das Gehäuse 2 auf die Bodenplatte 8 aufgesetzt wird, wird die Bodenplatte 20 mit den Öffnungen 22 über die Bolzen 14 gesteckt. Anschließend wir das Gehäuse 2 wie oben beschrieben, mit den Öffnungen 16 auf die Bolzen 14 gesetzt und dort verschraubt. Diese Verschraubung bewirkt, dass die Bodenplatte 20 zwischen dem Gehäuse 2 und dem Bodenfundament 8 durch die Bolzen 14 fixiert ist.

Auch ist zu erkennen, dass die Bodenplatte 20 über die Grundfläche des Bodenfundaments 8 hinausragen kann und beispielsweise auf dem Erdreich aufliegt. Dies ist jedoch unproblematisch, da die Bodenplatte 20 eine ausreichende Stabilität für einen Mast bietet, der dann an der Bodenplatte 20 angeordnet werden kann. Die Bodenplatte 20 bildet somit das Fundament für den Mast und ist ihrerseits über ein Bodenfundament 8 im Erdreich verankert.

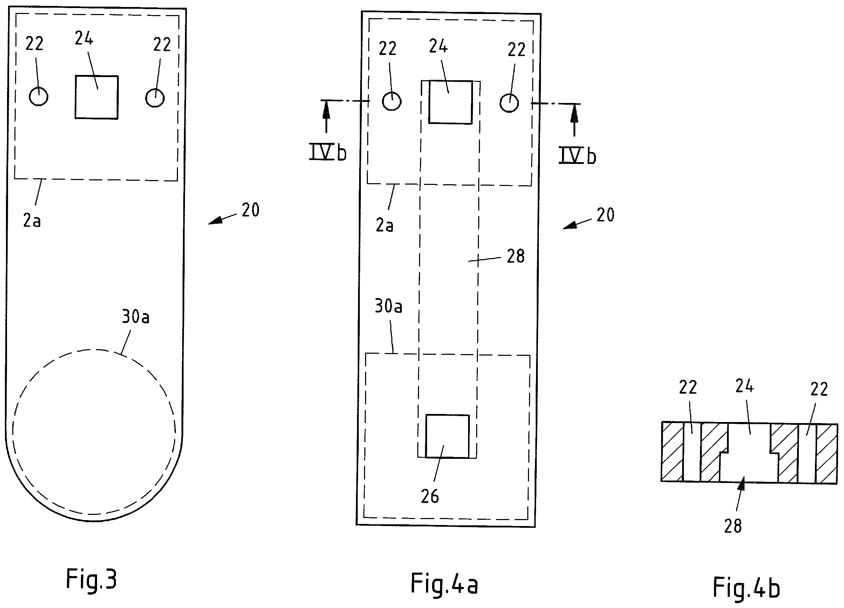

Die Bodenplatte 20 ist beispielhaft in den Figuren 3 bis 5 in Ausführungsbeispielen gezeigt.

Fig. 3 zeigt eine Draufsicht auf eine Bodenplatte 20. Zu erkennen sind die Öffnungen 22, die zu den Bolzen 14 korrespondieren. Ferner weist die Bodenplatte 20 eine Kabeldurchführung 24 auf, welche auch schon in der Fig. 2 zu erkennen ist. Durch die Kabeldurchführung 24 lässt sich das Erdkabel 18 von dem Bodenfundament 8 in Richtung des Gehäuses 2 durchführen.

Ferner ist in der Fig. 3 eine beispielhafte Form einer Bodenplatte 20 gezeigt. Mit den gestrichelten Linien sind die Grundflächen sowohl des Gehäuses 2 durch die gestrichelten Linien 2a, als auch eines Mastes durch die gestrichelten Linien 30 dargestellt. Wie zu erkennen ist, ist die Bodenplatte 20 in ihrer Form an die Grundflächen 2a, 30a angepasst. Beispielsweise kann ein Ende der Bodenplatte 20 so geformt sein, dass es kongruent zu einem Teil der Grundfläche des Gehäuses 2 ist und ein anderes Ende der Bodenplatte 20 kann so geformt sein, dass es kongruent zu einem Teil der Grundfläche des Mastes ist. Dadurch wird die Bodenplatte 20 durch das Gehäuse 2 und den Mast möglichst gut verdeckt und die Bodenplatte 20 bildet keine Stolperfalle.

Fig. 4a) zeigt ein weiteres Ausführungsbeispiel einer Bodenplatte 20. Auch hier ist zu erkennen, dass die Bodenplatte 20 an den jeweiligen Enden zumindest in Teilen an die Grundflächen 2a, 30a von Gehäuse 2 und Mast angepasst ist. Außerdem ist zu erkennen, dass neben der Kabeldurchführung 24 für das Erdkabel 18 eine weitere Kabeldurchführung 26 vorgesehen ist. Die Kabeldurchführung 26 ist vorzugsweise in dem Bereich, in dem die Grundfläche des Mastes auf der Bodenplatte 20 aufsteht. Die Kabeldurchführung 26 dient dazu, ein Ladekabel, welches ausgehend von der Ladeelektronik 6 in Richtung des Elektrofahrzeugs geführt wird, zunächst von dem Gehäuse 2 in das Innere des Mastes geführt werden kann.

Darüber hinaus weist die Bodenplatte 20 eine Nut 28 auf. Die Nut 28 verläuft vorzugsweise auf der Seite der Bodenplatte 20, die im montierten Zustand in Richtung des Bodenfundaments 8 gerichtet ist. Ferner verläuft die Nut 28 vorzugsweise zwischen den beiden Kabeldurchführungen 24, 26.

Die Nut 28 ist in der Schnittansicht gemäß Fig. 4b) dargestellt. Dort ist zu erkennen, dass die Nut 28 mit den Kabeldurchführungen 24, 26 fluchtet. Ferner sind die Öffnungen 22 seitlich von der Nut 28 angeordnet.

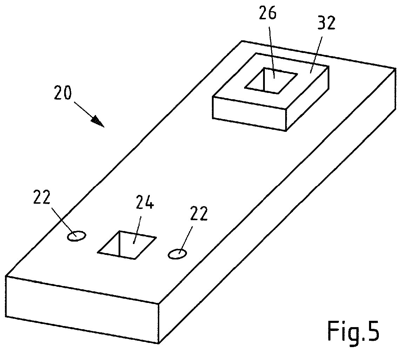

Fig. 5 zeigt ein weiteres Ausführungsbeispiel einer Bodenplatte 2, wobei hier zusätzlich der Flansch 32 gezeigt ist, mit welchem der Mast an der Bodenplatte 20 befestigt werden kann.

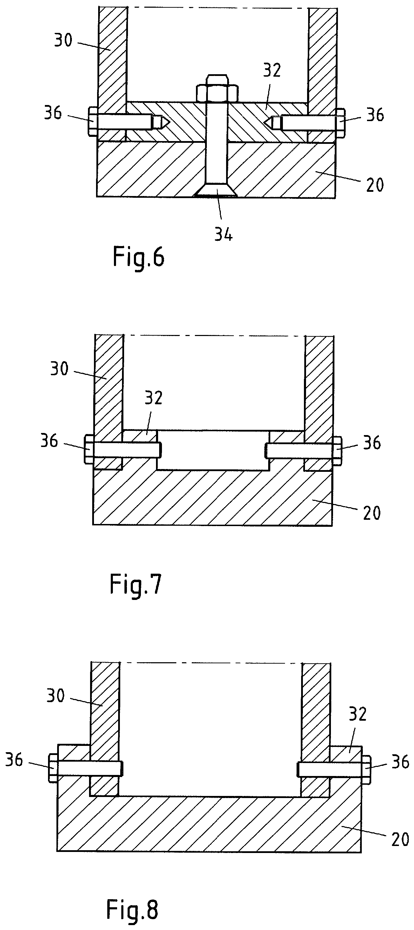

Der Flansch 32 ist in seiner Grundfläche vorzugsweise geometrisch ähnlich zu der Grundfläche des Mastes. Insbesondere ist der Flansch 32 geometrisch kongruent zu einer Öffnung im Boden des Mastes. Der Flansch 32 ist vorzugsweise einstückig aus der Bodenplatte 20 geformt oder an die Bodenplatte 20 angeformt. Dabei kann der Flansch 32 stoffschlüssig als auch kraftschlüssig mit der Bodenplatte 20 verbunden sein. In dem Flansch 32 kann, falls notwendig, die Kabeldurchführung 26 fortgeführt sein. Mögliche Flansche 32 zur Verbindung eines Mastes mit der Bodenplatte 20 sind in den Figuren 6 bis 8 dargestellt.

Fig. 6 zeigt einen Querschnitt durch eine Bodenplatte 20 und einen Flansch 32. Auf den Flansch 32 ist ein Boden des Mastes 30 aufgesteckt.

Wie zu erkennen ist, ist der Flansch 32 mit einer Schraube 34 mit der Bodenplatte 20 verschraubt. Anschließend lässt sich der Mast 30 über den Flansch 32 stecken. Schließlich wird der Mast 30 bodenseitig, im Bereich einer bodenseitigen Kante, mit Schrauben an dem Flansch 32 verschraubt. Dies gibt dem Mast 30 einen ausreichenden Halt. Die Schrauben 36 sind vorzugsweise umlaufend um den Mast in gleichen Winkelabständen zueinander angeordnet. Vorzugsweise sind vier, sechs, acht oder zehn Schrauben 36 vorgesehen, um den Mast 30 mit dem Flansch 32 zu verschrauben. Dies gilt auch für die weiteren Ausführungsbeispiele. Anstelle der Schrauben können auch andere Befestigungsmittel, z.B. Bolzen oder Nieten verwendet werden.

Fig. 7 zeigt ein weiteres Ausführungsbeispiel einer Bodenplatte 20, bei dem der Flansch 32 einstückig mit der Bodenplatte 20 gebildet ist. Der Flansch ist dabei durch eine vorzugsweise vollständig umlaufende Auskragung aus der Oberfläche der Bodenplatte 20 gebildet. Der Mast 30 wird bodenseitig über den Flansch 32 gestülpt. Anschließend erfolgt eine Verschraubung mit den Schrauben 36.

Auch ist es möglich, dass der Flansch 32, wie in Fig. 8 gezeigt, den Mast 30 umgreift. Hierbei ist der Flansch 32 ebenfalls vorzugsweise vollständig umlaufend geformt und bildet eine Aufnahme für den Boden des Mastes 30. Nachdem der Mast 30 in den Flansch 32 eingesteckt wurde, kann dieser mit den Schrauben 36 verschraubt werden.

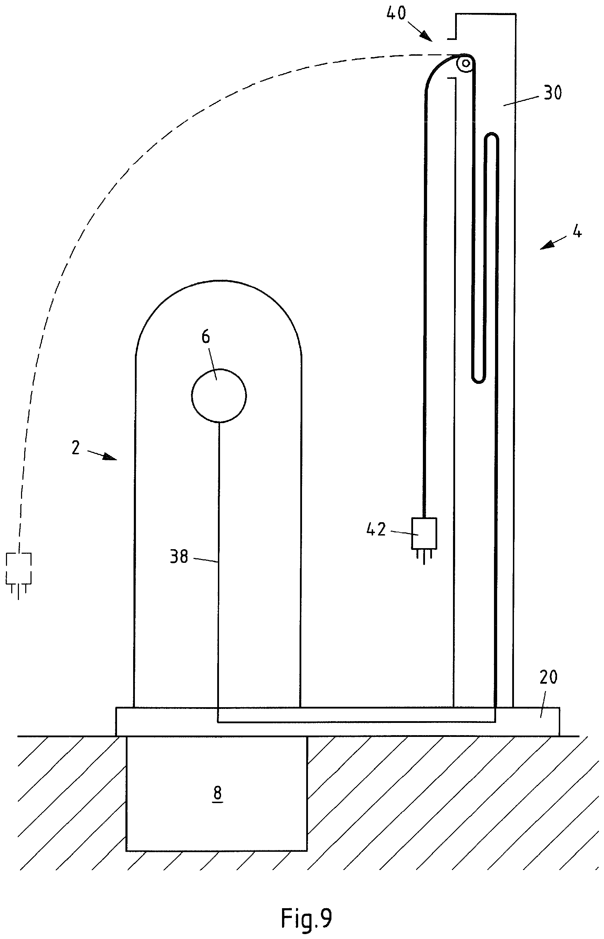

Eine montierte Ladestation 4 mit Mast 30 und Gehäuse 2 ist in der Fig. 9 gezeigt. Zu erkennen ist, dass die Bodenplatte 20 an dem Bodenfundament 8 befestigt ist. Auf der Bodenplatte 20 steht das Gehäuse 2 als auch der Mast 30.

In dem in Fig. 9 gezeigten Ausführungsbeispiel ist ein Ladekabel 38 ausgehend von der Ladeelektronik 6 durch die Nut 28 der Bodenplatte 20 in das Innere des Mastes 30 geführt. Im Inneren des Mastes 30 ist das Ladekabel 38 vorzugweise durch einen Seilzug gehalten.

Im oberen Bereich des Mastes 30 ist eine Öffnung 40 vorgesehen. In der Öffnung 40 sind vorzugsweise Umlenkrollen, so dass das Ladekabel 38 beim Herausziehen und Einziehen in den Mast nicht beschädigt wird.

Das Ladekabel 38 ist in der durchgezogenen Linie in der Ruhestellung dargestellt. Hierbei ist das Ladekabel 38 in das Innere des Mastes 30 gezogen und der Ladekabelstecker 42 liegt nicht auf dem Boden auf. Zur Nutzung des Ladekabels 38 kann der Nutzer den Ladekabelstecker 42 und das Ladekabel 38 frei bewegen und insbesondere das Ladekabel 38 aus der Führung innerhalb des Mastes 30 herausziehen und so in die gewünschte Position, wie sie mit den gestrichelten Linien dargestellt ist, bewegen. Nach Beendigung des Ladevorgangs wird das Ladekabel 38 durch den Seilzug wieder in die Ruhestellung zurück gezogen.

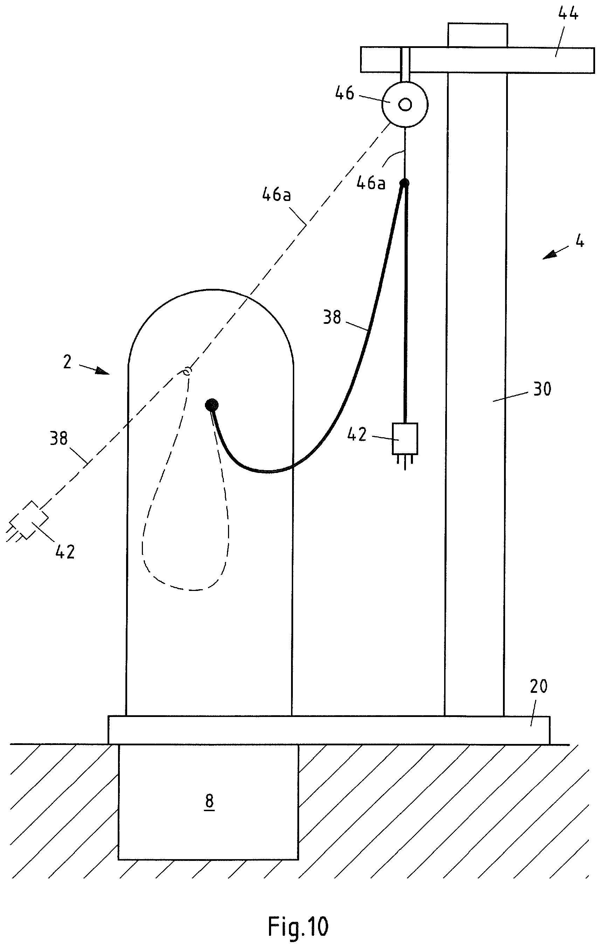

Fig. 10 zeigt ein weiteres Ausführungsbeispiel, bei dem das Ladekabel 38 ebenfalls fest an dem Gehäuse 2 angeschlagen ist. In diesem Ausführungsbeispiel ist im Bereich des oberen Ende des Mastes beispielsweise eine Abdeckung 44, beispielsweise ein Querholm sowie ein daran angeordneter Federzug 46 vorgesehen. Mittels des Federzugs 46, der über ein Seil an dem Ladekabel 38 befestigt ist, lässt sich das Ladekabel 38 in die in Fig. 10 gezeigte Ruhestellung (durchgezogene Linie) ziehen, so dass der Ladekabelstecker 42 nicht auf dem Boden aufliegt. Zur Nutzung kann der Nutzer das Ladekabel 38 in die Gebrauchsstellung ziehen. Dazu gibt der Federzug 46 das Seil 46a frei. Nach Gebrauch wird das Ladekabel 38 durch den Federzug 46 wieder in die Ruhestellung zurückgezogen.

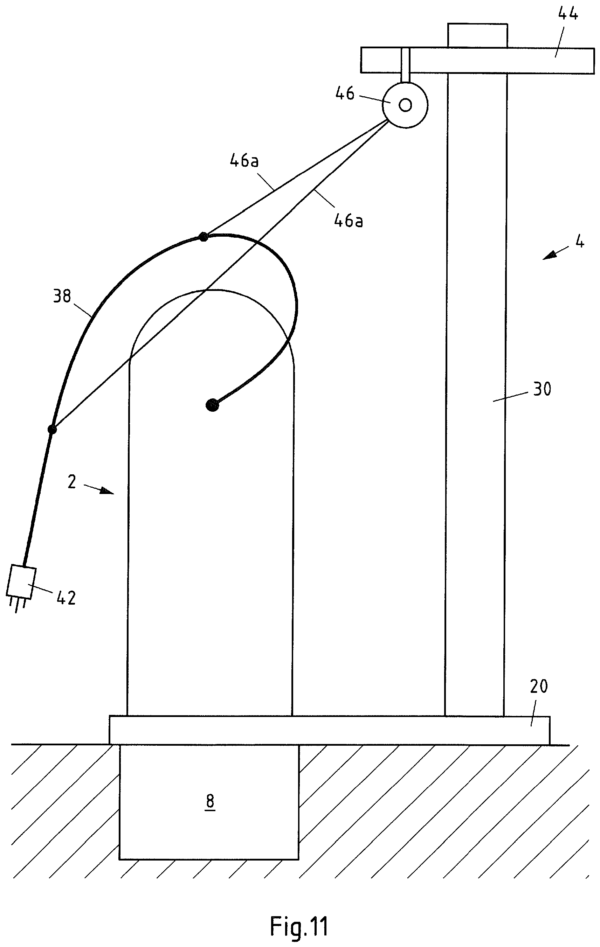

Fig. 11 zeigt ein weiteres Ausführungsbeispiel einer Ladestation 4 mit einem Gehäuse 2 und einem Mast 30. Hierbei ist das Ladekabel 38 an mehreren Punkten mit einem jeweiligen Seil 46a mit einem jeweiligen Federzug verbunden. Hierdurch wird erreicht, dass in der Gebrauchsstellung das Ladekabel 38 zumindest teilweise austariert ist. Insbesondere wird die Gewichtskraft des Ladekabels 38 zumindest teilweise durch den Federzug 46 und das Seil 46a austariert.

### Bezugszeichenliste

- 2: Gehäuse
- 2a: Grundfläche Gehäuse
- 4: Ladestation
- 6: Ladeelektronik
- 8: Bodenfundament
- 10: Ausschachtung
- 12: Füllmaterial
- 14: Bolzen
- 16: Öffnung
- 18: Erdkabel
- 20: Bodenplatte
- 22: Öffnung
- 24,26: Kabeldurchführung
- 28: Nut
- 30: Mast
- 30a: Grundfläche Mast
- 32: Flansch
- 34,36: Schrauben/Bolzen
- 38: Ladekabel
- 40: Öffnung
- 42: Ladekabelstecker
- 44: Abdeckung
- 46: Federzug
- 46a: Seil

## Patentansprüche

1. Ladestation (4) für Elektrofahrzeuge umfassend:
- ein Gehäuse (2),
- in dem Gehäuse (2) angeordnete Ladeelektronik,
- einen neben dem Gehäuse (2) angeordneten, ein aus dem Gehäuse (2) heraus geführtes Ladekabel (38) führenden Mast (30), und
- ein das Gehäuse (2) tragendes Bodenfundament (8), wobei
- eine Bodenplatte (20) auf das Bodenfundament (8) aufgelegt ist, und an der Bodenplatte (20) der Mast (30) befestigt ist,
**dadurch gekennzeichnet,**
- **dass** das Gehäuse (2) mit seinem Boden vollflächig auf der Bodenplatte aufsteht,
- **dass** die Bodenplatte zwischen dem Boden des Gehäuses (2) und einer Oberseite des Bodenfundaments (8) verschraubt ist.

2. Ladestation (4) nach Anspruch 1,
**dadurch gekennzeichnet,**
- **dass** der Mast (30) bodenseitig an der Bodenplatte (20) befestigt ist und dass der Mast (30) das Ladekabel (38) an seiner Oberseite hält.

3. Ladestation (4) nach Anspruch 1 oder 2,
**dadurch gekennzeichnet,**
- **dass** der Mast (30) einen Federzug (46)aufweist, dass das Ladekabel (38) an dem Federzug (46)befestigt ist und/oder dass der Mast (30) einen Federmast aufweist, dass das Ladekabel (38) an dem Federmast befestigt ist.

4. Ladestation (4) nach einem der vorangehenden Ansprüche,
**dadurch gekennzeichnet,**
- **dass** das Ladekabel (38) zumindest im Bereich des Ladekabelsteckers (42) mit dem Federzug (46)verbunden ist, und/oder dass das Ladekabel (38) in einem Mittenbereich zwischen dem Ladekabelstecker (42) und dem Gehäuse (2) mit dem Federzug (46)verbunden ist.

5. Ladestation (4) nach einem der vorangehenden Ansprüche,
**dadurch gekennzeichnet,**
- **dass** die Bodenplatte (20) metallisch ist.

6. Ladestation (4) nach einem der vorangehenden Ansprüche,
**dadurch gekennzeichnet,**
- **dass** die Bodenplatte (20) zumindest die Größe der Grundfläche des Gehäuses (2) und des Mastes (30) aufweist.

7. Ladestation (4) nach einem der vorangehenden Ansprüche,
**dadurch gekennzeichnet,**
- **dass** die Bodenplatte (20) einen in Richtung des Masts (30) ragenden Flansch (32) aufweist und dass der Mast (30) den Flansch (32) bodenseitig umschließt.

8. Ladestation (4) nach einem der vorangehenden Ansprüche,
**dadurch gekennzeichnet,**
- **dass** die Bodenplatte (20) im Bereich des Gehäuses (2) eine Kabeldurchführung (24, 26) aufweist.

9. Ladestation (4) nach einem der vorangehenden Ansprüche,
**dadurch gekennzeichnet,**
- **dass** das Ladekabel (38) fest an dem Gehäuse (2) angeschlagen ist.

10. Ladestation (4) nach einem der vorangehenden Ansprüche,
**dadurch gekennzeichnet,**
- **dass** der Mast (30) einen sich in Längsrichtung erstreckenden, bodenseitig offenen Hohlraum aufweist und insbesondere dass das Ladekabel (38) bodenseitig in den Hohlraum geführt ist und in einem oberseitigen Bereich des Masts (30) aus dem Hohlraum heraus geführt ist.

11. Ladestation (4) nach einem der vorangehenden Ansprüche,
**dadurch gekennzeichnet,**
- **dass** das Ladekabel (38) in dem Mast (30) an einem Seilzug geführt ist.

12. Ladestation (4) nach einem der vorangehenden Ansprüche,
**dadurch gekennzeichnet,**
- **dass** die Bodenplatte (20) eine zwischen dem Gehäuse (2) und der Halterung, auf der dem Bodenfundament (8) zugewandten Seite angeordnete Nut (28) aufweist.

## Claims

1. Charging station (4) for electric vehicles comprising:
- a housing (2),
- charging electronics arranged in the housing (2),
- a pole (30) arranged adjacent to the housing (2) and leading a charging cable out of the housing (2), and
- a foundation supporting the housing (2), wherein
- a base plate (20) is placed onto the foundation (8) and a pole (30) is fixed to the base plate (30),
**characterized in that**
- the housing (2) is placed onto the foundation with its complete base,
- the base plate being screwed between the base of the housing (2) and an upper side of the foundation (8).

2. Charging station (4) according to claim 1,
**characterized in that**
- the pole (30) is attached to the base plate (20) on its lower side and that the pole (30) holds the charging cable (38) on its upper side.

3. Charging station (4) according to claim 1 or 2,
**characterized in that**
- the pole (30) has a spring balancer (46), **in that** the charging cable (38) is fastened to the spring balancer (46) and/or **in that** the pole (30) has a spring pole (30), **in that** the charging cable (38) is fastened to the spring pole (30).

4. Charging station (4) according to one of the preceding claims,
**characterized in that**
- the charging cable (38) is connected to the spring balancer (46) at least in the region of the charging cable plug (46), and/or **in that** the charging cable (38) is connected to the spring balancer (46) in a central region between the charging cable plug (46) and the housing (2).

5. Charging station (4) according to one of the preceding claims,
**characterized in that**
- the base plate (20) is metallic.

6. Charging station (4) according to one of the preceding claims,
**characterized in that**
- the base plate (20) has at least the size of the base area of the housing (2) and of the pole (30).

7. Charging station (4) according to one of the preceding claims,
**characterized in that**
- the base plate (20) has a flange (32) projecting in the direction of the pole (30), and **in that** the pole (30) encloses the flange (32) on the bottom side.

8. Charging station (4) according to one of the preceding claims,
**characterized in that**
- the base plate (20) has a cable bushing in the region of the housing (2).

9. Charging station (4) according to one of the preceding claims,,
**characterized in that**
- the charging cable (38) is fixedly mounted to the housing (2).

10. Charging station (4) according to one of the preceding claims,
**characterized in that**
- the pole (30) has a cavity which extends in the longitudinal direction and is open at its lower side, and in particular **in that** the charging cable (38) is led into the cavity at the lower side and is led out of the cavity in an upper side of the pole (30).

11. Charging station (4) according to one of the preceding claims,
**characterized in that**
- the charging cable (38) in the pole (30) is guided by a pulley.

12. Charging station (4) according to one of the preceding claims,
**characterized in that**
- the base plate (20) has a groove (28) arranged between the housing (2) and the holder on the side facing the foundation (8).

## Revendications

1. Station de charge (4) pour véhicules électriques comprenant :
- un boîtier (2),
- une électronique de charge disposée dans le boîtier (2),
- un mât (30) disposé à côté du boîtier (2) et guidant un câble de charge (38) sortant du boîtier (2), et
- une fondation de base (8) supportant le boîtier (2),
- où une plaque de base (20) est placée sur la fondation au sol (8) et le mât (30) est fixé à la plaque de base (20),
**caractérisée**
- **en ce que** le boîtier (2) repose sur toute la surface de son fond sur la plaque de base,
- **en ce que** la plaque de base est vissée entre le fond du boîtier (2) et un côté supérieur de la fondation de base (8).

2. Station de charge (4) selon la revendication 1,
**caractérisée**
- **en ce que** le mât (30) est fixé à la plaque de base (20) du côté du sol et
- **en ce que** le mât (30) maintient le câble de charge (38) sur son côté supérieur.

3. Station de charge (4) selon la revendication 1 ou 2,
**caractérisée**
- **en ce que** le mât (30) comporte un équilibreur à ressort (46), en ce que le câble de chargement (38) est fixé à l'équilibreur à ressort (46) et/ou
- **en ce que** le mât (30) comporte un mât à ressort, en ce que le câble de chargement (38) est fixé au mât à ressort.

4. Station de charge (4) selon l'une des revendications précédentes,
**caractérisée**
- **en ce que** le câble de chargement (38) est relié à l'équilibreur à ressort (46) au moins dans la zone de la fiche du câble de chargement (42), et/ou
- **en ce que** le câble de chargement (38) est relié à l'équilibreur à ressort (46) dans une zone centrale entre la fiche du câble de chargement (42) et le boîtier (2).

5. Station de charge (4) selon l'une des revendications précédentes,
**caractérisé**
- **en ce que** la plaque de base (20) est métallique.

6. Station de charge (4) selon l'une des revendications précédentes,
**caractérisée**
- **en ce que** la plaque de base (20) a au moins la taille de la surface de base du boîtier (2) et du mât (30).

7. Station de charge (4) selon l'une des revendications précédentes,
**caractérisée**
- **en ce que** la plaque de base (20) comporte une bride (32) faisant saillie en direction du mât (30) et
- **en ce que** le mât (30) entoure la bride (32) du côté de la base.

8. Station de charge (4) selon l'une des revendications précédentes,
**caractérisée**
- **en ce que** la plaque de base (20) comporte un passage de câble (24, 26) dans la zone du boîtier (2).

9. Station de charge (4) selon l'une des revendications précédentes,
**caractérisée**
- **en ce que** le câble de chargement (38) est fermement fixé au boîtier (2).

10. Station de charge (4) selon l'une des revendications précédentes,
**caractérisée**
- **en ce que** le mât (30) présente une cavité s'étendant dans la direction longitudinale et ouverte du côté bas, et en particulier en ce que le câble de charge (38) est guidé du côté bas dans la cavité et est guidé hors de la cavité dans une zone du côté supérieur du mât (30).

11. Station de charge (4) selon l'une des revendications précédentes,
**caractérisée**
- **en ce que** le câble de charge (38) est guidé dans le mât (30) par un système de traction à poulies.

12. Station de charge (4) selon l'une des revendications précédentes,
**caractérisée**
- **en ce que** la plaque de base (20) présente une rainure (28) disposée entre le boîtier (2) et le support, sur le côté tourné vers la fondation de base (8).
